# DEMANDE DE BREVET EUROPEEN

(11) **EP 2 039 488 A1**
(43) Date de publication de la demande: **25.03.2009**
(21) Numéro de dépôt: 08290871.6
(22) Date de dépôt: 16.09.2008
(51) Int. Cl.: B29C 44/08, B29C 44/14

(54) **Panneau structurel de véhicule automobile comprenant une coque moulée à base de fibres de cellulose**

(30) Priorité: 17.09.2007 FR 0706537
(71) Demandeur: Centre d'etude et de recherche pour l'automobile, 51100 Reims (FR)
(72) Inventeur: Bataille, Fabien, 51100 Reims (FR); Brillon, Eric, 511400 Treslon (FR); Rouxel, Patrice, 51100 Reims (FR)
(74) Mandataire: Sayettat, Julien Christian

(57) **Abrégé**

L'invention concerne un panneau (1) structurel de véhicule automobile, ledit panneau comprenant une âme (2) à base de mousse rigide moulée et une couche (3) de matériau de revêtement recouvrant la face d'endroit (7) de ladite âme, ladite couche étant associée à ladite face d'endroit par l'intermédiaire d'une coque (4) moulée à base de fibres de cellulose. L'invention concerne également un procédé de réalisation d'un tel panneau.

## Description

L'invention concerne un panneau structurel de véhicule automobile et un procédé de réalisation d'un tel panneau.

Il est connu de réaliser un panneau structurel de véhicule automobile, par exemple une tablette ou un faux plancher, ledit panneau comprenant une âme à base de mousse rigide moulée, par exemple en polyuréthanne, et une couche de matériau de revêtement, par exemple en non tissé, recouvrant la face d'endroit de ladite âme.

La couche de matériau de revêtement est notamment collée lors d'une étape ultérieure sur la face d'endroit de ladite âme.

Lorsque la mousse est en particulier un polyuréthanne rigide de faible densité, par exemple de l'ordre de 0,1, la face d'endroit présente souvent des défauts de surface, tel que des cratères, qui doivent être rebouchés avant collage du matériau de revêtement, ce qui complexifie la fabrication du panneau.

En outre, le moulage de l'âme donne lieu à des fuites de mousse au niveau du plan de joint du moule, ce qui requiert un ébavurage périphérique de l'âme après son démoulage.

On notera que la mousse est généralement renforcée par des fibres de renfort, par exemple à base de verre, ce qui rend plus ardue l'étape d'ébavurage sus mentionnée, les fibres s'introduisant elles aussi au niveau du plan de joint.

Par ailleurs, la mousse, généralement d'origine pétrolière, présente un coût important et n'est pas une ressource renouvelable. Il est donc souhaitable d'en limiter l'utilisation.

L'invention a pour but de limiter ou supprimer les inconvénients sus mentionnés.

A cet effet, et selon un premier aspect, l'invention propose un panneau structurel de véhicule automobile, ledit panneau comprenant une âme à base de mousse rigide moulée et une couche de matériau de revêtement recouvrant la face d'endroit de ladite âme, ladite couche étant associée à ladite face d'endroit par l'intermédiaire d'une coque moulée à base de fibres de cellulose.

Par mousse rigide, on entend une mousse dont le module de flexion permet de l'utiliser pour réaliser par exemple des tablettes de recouvrement des bagages ou des faux planchers, ceci par opposition à des mousses flexibles telles qu'employées pour réaliser par exemple des matelassures de sièges.

L'aspect de surface de la coque étant sensiblement uniforme, il n'est pas requis de corriger les défauts de surface avant association de la couche de matériau de revêtement.

Selon un deuxième aspect, l'invention propose un procédé de réalisation d'un tel panneau.

Le procédé décrit par la suite permet d'éviter, ou du moins de limiter, l'étape d'ébavurage. En outre, il permet de réaliser une baisse de la quantité de mousse mise en oeuvre, notamment de l'ordre de 30%, ceci en raison du volume occupé par la coque et du dégazage réalisé au travers de l'épaisseur de ladite coque qui permet de mettre en oeuvre des mousses de densité allégée.

D'autres particularités et avantages de l'invention apparaîtront dans la description qui suit, faite en référence aux figures jointes dans lesquelles :

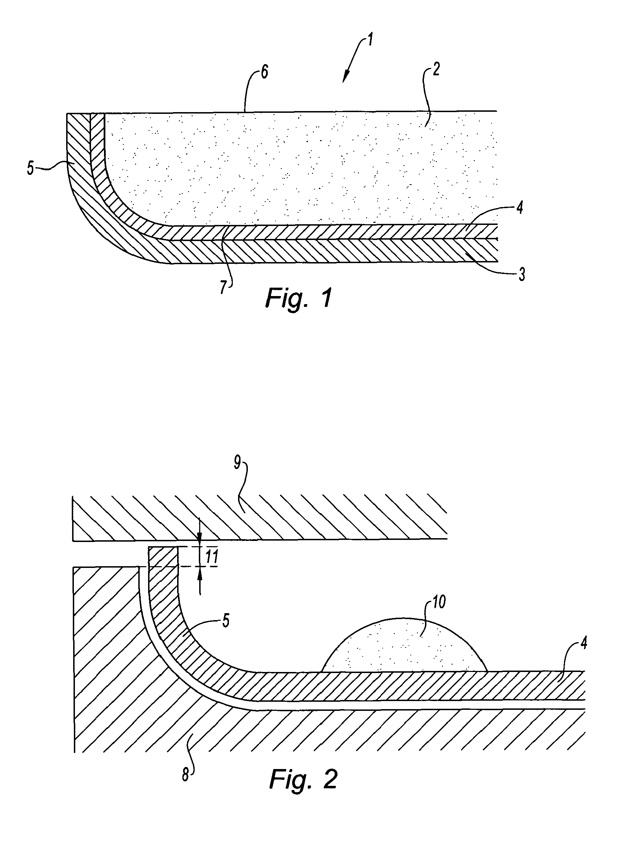

- la figure 1 est une représentation schématique en coupe partielle d'un panneau selon une réalisation,
- la figure 2 est une représentation schématique en coupe partielle d'un moule dans la cuve duquel est disposée une coque, le couvercle du moule étant en cours de fermeture.

En référence aux figures, on décrit un panneau 1 structurel de véhicule automobile, par exemple une tablette ou un faux plancher, ledit panneau comprenant une âme 2 à base de mousse rigide moulée et une couche 3 de matériau de revêtement, par exemple en non tissé, recouvrant la face d'endroit 7 de ladite âme, ladite couche étant associée à ladite face d'endroit par l'intermédiaire d'une coque 4 moulée à base de fibres de cellulose.

De telles coques moulées sont bien connues et utilisées par exemple dans le domaine des emballages pour oeufs. Un procédé de moulage de telles coques comprend notamment les étapes de réaliser un dépôt de pâte à papier sur une grille tridimensionnelle, ladite pâte étant chauffée et plaquée contre ladite grille par aspiration sous vide d'une feuille souple disposée dessus.

La coque 4 utilisée dans le cadre de l'invention présente donc une géométrie tridimensionnelle correspondant à celle de la grille ou de tout autre type de moule ayant servi à la mouler.

Selon une réalisation, la coque 4 présente une épaisseur comprise entre 1 et 3 mm, notamment entre 1,5 et 2 mm.

Une telle épaisseur permet de conférer à la coque 4 une rigidité suffisante pour assurer un masquage parfait, sans déformation de ladite coque, à l'aplomb d'éventuels cratères résiduels présents sur la face d'endroit 7 de l'âme 2.

Selon une réalisation, la coque 4 présente une masse surfacique comprise entre 300 et 600 g/m², notamment entre 400 et 500 g/m².

Avec de telles caractéristiques, la coque 4 présente une porosité permettant un dégazage à travers son épaisseur lorsque l'âme 2 est réalisée par moulage, notamment lorsque ladite âme est à base de polyuréthanne venant surmouler ladite coque, ainsi qu'on le verra dans le procédé décrit plus loin.

Selon une réalisation, la coque 4 comprend un rebord 5 s'étendant sur la tranche de l'âme jusqu'en bordure de sa face d'envers 6. Un tel agencement permet notamment de réaliser un panneau 1 d'esthétique optimale. En outre, comme on le verra ci-après dans la description du procédé, le fait que le rebord 5 s'étende de la sorte permet qu'il forme barrière contre la mousse et/ou les fibres de renfort lors de la phase d'expansion de la mousse et ainsi évite, ou du moins limite, une étape ultérieure d'ébavurage périphérique.

Comme évoqué ci-dessus et selon une réalisation, l'âme 2 est à base de mousse de polyuréthanne.

Selon une réalisation, la mousse constitutive d'une telle âme 2 présente une densité comprise entre 0,08 et 0,13, notamment de l'ordre de 0,1. La possibilité de descendre à d'aussi faibles densités est facilitée par l'emploi de la coque 4 au travers de laquelle s'évacuent les gaz issus du moulage de l'âme 2.

Selon une réalisation, la mousse constitutive de l'âme 2 est renforcée par des fibres de renfort, par exemple en verre ou d'origine végétale (chanvre,...).

On décrit à présent un procédé de réalisation d'un panneau 1 comprenant les étapes de :
- prévoir un moule de moulage comprenant une cuve 8 et un couvercle 9,
- prévoir une coque 4 moulée à base de fibres de cellulose de géométrie correspondant à celle de ladite cuve,
- disposer ladite coque dans ladite cuve,
- injecter dans ladite coque, ou de façon non représentée dans ledit couvercle, un produit 10 précurseur de mousse rigide, éventuellement chargé en fibres de renfort,
- fermer ledit moule,
- après expansion de la mousse, démouler l'âme 2 obtenue, la face d'endroit 7 de ladite âme surmoulant ladite coque,
- associer, notamment par collage, une couche 3 de matériau de revêtement sur ladite coque de sorte que ladite couche soit associée à ladite face d'endroit par l'intermédiaire de ladite coque.

Selon une réalisation, la coque 4 comprend un rebord 5 qui présente, au moins en partie, une dimension supérieure, par exemple d'un excédent 11 de l'ordre de 1 à 2 mm, à la dimension correspondante de la cuve 8, de sorte à permettre sa compression contre le couvercle 9 lors de la fermeture du moule, ceci afin de former barrière contre la mousse et/ou les fibres de renfort lors de la phase d'expansion de la mousse, et éviter, ou du moins limiter, une étape ultérieure d'ébavurage périphérique.

## Revendications

1. Panneau (1) structurel de véhicule automobile, ledit panneau comprenant une âme (2) à base de mousse rigide moulée et une couche (3) de matériau de revêtement recouvrant la face d'endroit (7) de ladite âme, ledit panneau étant **caractérisé en ce que** ladite couche est associée à ladite face d'endroit par l'intermédiaire d'une coque (4) moulée à base de fibres de cellulose.

2. Panneau selon la revendication 1, **caractérisé en ce que** la coque (4) présente une épaisseur comprise entre 1 et 3 mm, notamment entre 1,5 et 2 mm.

3. Panneau selon la revendication 1 ou 2, **caractérisé en ce que** la coque (4) présente une masse surfacique comprise entre 300 et 600 g/m², notamment entre 400 et 500 g/m².

4. Panneau selon l'une quelconque des revendications 1 à 3, **caractérisé en ce que** la coque (4) comprend un rebord (5) s'étendant sur la tranche de l'âme (2) jusqu'en bordure de sa face d'envers (6).

5. Panneau selon l'une quelconque des revendications 1 à 4, **caractérisé en ce que** l'âme (2) est à base de mousse de polyuréthanne.

6. Panneau selon la revendication 5, **caractérisé en ce que** la mousse constitutive de l'âme (2) présente une densité comprise entre 0,08 et 0,13, notamment de l'ordre de 0,1.

7. Panneau selon l'une quelconque des revendications 1 à 6, **caractérisé en ce que** la mousse constitutive de l'âme (2) est renforcée par des fibres de renfort.

8. Procédé de réalisation d'un panneau selon l'une quelconque des revendications 1 à 7, **caractérisé en ce qu'**il comprend les étapes de :
• prévoir un moule de moulage comprenant une cuve (8) et un couvercle (9),
• prévoir une coque (4) moulée à base de fibres de cellulose de géométrie correspondant à celle de ladite cuve,
• disposer ladite coque dans ladite cuve,
• injecter dans ladite coque ou ledit couvercle un produit (10) précurseur de mousse rigide,
• fermer ledit moule,
• après expansion de la mousse, démouler l'âme (2) obtenue, la face d'endroit (7) de ladite âme surmoulant ladite coque,
• associer une couche (3) de matériau de revêtement sur ladite coque de sorte que ladite couche soit associée à ladite face d'endroit par l'intermédiaire de ladite coque.

9. Procédé selon la revendication 8, quand elle dépend de la revendication 4, **caractérisé en ce que** le rebord (5) de la coque (4) présente, au moins en partie, une dimension supérieure à la dimension correspondante de la cuve (8), de sorte à permettre sa compression contre le couvercle (9) lors de la fermeture du moule.
